# EUROPEAN PATENT SPECIFICATION

(11) **EP 1 126 951 B1**
(45) Date of publication and mention of the grant of the patent: **07.04.2004**
(21) Application number: 98952150.5
(22) Date of filing: 08.10.1998
(51) Int. Cl.: B24B 39/00, B23P 9/02

(54) **BURNISHING METHOD AND APPARATUS FOR PROVIDING A LAYER OF COMPRESSIVE RESIDUAL STRESS IN THE SURFACE OF A WORKPIECE**
VERFAHREN UND VORRICHTUNG ZUM PRÄGEPOLIEREN ZUM HERSTELLEN EINER RESTDRUCKSPANNUNG ÜBER EINE WERKSTÜCKFLÄCHE
PROCEDE ET APPAREIL DE BRUNISSAGE PERMETTANT D'OBTENIR UNE COUCHE DE TENSION DE COMPRESSION RESIDUELLE DANS LA SURFACE D'UNE PIECE

(43) Date of publication of application: 29.08.2001
(60) Divisional application: 03078725.3
(73) Proprietor: Surface Technology Holdings, Ltd., Cincinnati, Ohio 45246 (US)
(72) Inventor: PREVEY, Paul, S., III, Cincinnati, OH 45246 (US)
(74) Representative: Carpmaels & Ransford
(86) International application number: PCT/US1998/021188
(87) International publication number: WO 2000/020170

(56) References cited:
- US-A- 2 247 887
- US-A- 3 770 595
- US-A- 4 947 668
- US-A- 5 666 841
- PREVEY: 'The measurement of subsurface residual stress and cold working distributions in nickel base alloys', April 1987, AMERICAN SOCIETY FOR METALS, CINCINNATI, OHIO XP002105525 see the whole document

## Description

### Technical Field

The subject invention relates to burnishing methods and particularly to a burnishing method for providing a layer of compressive residual stress in the surface of a workpiece according to the preamble of claim 1.

### Background of the Invention

This invention relates to a burnishing operation and, more particularly, to a method of burnishing to induce a layer of compressive residual stress in the surface of a workpiece to provide a part with a relatively good finish and improved physical properties.

Surface residual stresses are known to have a major affect upon the fatigue and stress corrosion performance of components in service. Tensile residual stresses, which can be developed during manufacturing processes such as grinding, turning, or welding are well known to reduce both fatigue life and increase sensitivity to corrosion-fatigue and stress corrosion cracking in a wide variety of materials. It is well known that compressive residual stresses induced in the surface of a workpiece can increase fatigue life and reduce susceptibility to corrosion-fatigue and stress corrosion cracking. However, the benefit of a layer of surface compression in reducing susceptibility to stress corrosion, cracking, fatigue, and corrosion-fatigue is lost if the layer of compression relaxes with time in service.

There are many methods currently used for inducing compressive stress in the surface of a metal part and the particular method selected depends on several factors including the dimensions and shape of the workpiece, its strength and stiffness, the desired quality of the finished surface, the desired physical properties of the finished part, and the expense of performing the operation.

Burnishing has been used to improve surface finish, fatigue life, and corrosion resistance. The accepted practice for burnishing utilizes repeated deformation of the surface of the component, in order to deliberately cold work the surface of the material to increase the yield strength. Compressive stresses are developed by yielding the surface of the material in tension so that it returns in a state of compression following deformation. Unfortunately however, excess cold working may produce tensile surface residual stresses and may leave the surface susceptible to overload and thermal relaxation.

One method commonly used in the industry to induce compressive stress in the surface of a workpiece is shot peening, whereby a plurality of metallic or ceramic pellets are projected mechanically or through air pressure to impinge the surface of a workpiece. While such a method is relatively inexpensive and is preferred for many applications, in order to obtain total coverage of the workpiece, areas of impingement often overlap. Such overlapping of areas of impingement often results in a large amount of cold working which leaves the surface compressive layer susceptible to stress relaxation. Further, shot peening is unacceptable for use for parts requiring a superior finish, localized compressive stress zones, or requiring a greater depth of compressive stress penetration.

Another method, similar to shot peening, commonly used in the industry to induce compressive stress in the surface of a workpiece is gravity peening, whereby pellets are dropped through a chute from a predetermined distance onto the surface of the workpiece. While gravity peening uses a smaller number of larger pellets to deform the surface, the workpiece continues to be subjected to a substantial amount of cold working. Further, like shot peening methods, gravity peening is often unacceptable for use with parts requiring a superior finish, localized compressive stress zones, or requiring a greater depth of compressive stress penetration.

Another method commonly used in industry for inducing compressive stress on the surface of a workpiece is by burnishing, whereby the contact portion of a burnishing assembly is pressed against the surface of the workpiece to deliberately cold work the surface to minimize surface roughness and increase surface hardness, thereby improving the fatigue strength of the part. Until now, it has been believed that the surface of a workpiece must be extensively cold worked by making multiple passes over the surface with the contact portion of the burnishing assembly with sufficient pressure to crush the elevations in the surface topography to achieve the desired surface hardness and therefore the desired residual compressive stress.

The burnishing apparatus utilized for cold working the surface of a workpiece typically comprise a plurality of cylindrical rollers or balls which contact the surface of the workpiece with sufficient pressure to cold work the surface to induce a compressive stress therein. Such burnishing apparatus, however, are typically limited to cylindrical or flat work pieces. Further, the use of multiple passes often results in excessive cold working which may cause surface tensile residual stresses, and leaving the compressive layer subject to relaxation.

It is also known that by lubricating the surface of the workpiece, the amount of surface damage resulting from the burnishing process can be significantly reduced. Unfortunately however, until now the application of lubricant has been performed by hand or with the use of a separate applicator which often hinders or prevents adequate lubrication at the point of contact of the workpiece and the contact portion of the burnishing apparatus.

US-A-4947668 describes a burnishing and deep rolling tool comprising a roller head including a hydrostatic bearing socket for rotatably supporting, guiding and holding a roller or ball and discloses a method according to the preamble of claim 1.

A need exists for a relatively inexpensive method and apparatus for implementing the method for improving the physical properties of a part by inducing a layer of compressive stress in the surface of the part, which is effective for use with complex curved surfaces and which provides for longer retention of compressive stresses than have previously been available using conventional methods of burnishing or shot peening.

### Disclosure of Invention

The present invention is defined in claim 1. Dependent claims 2 to 18 relate to preferred embodiments of the invention.

The novel method of the present invention utilizes the process of a single-point burnishing to induce a layer of compressive residual stress with a minimal amount of cold working and surface hardening for providing for much longer retention of the compressive stresses than have previously been available using conventional methods of burnishing or shot peening. In particular, the area to be burnished along the surface of the workpiece is defined and a burnishing apparatus having a single-point of contact burnishing means is forced against the surface of the workpiece to produce a zone of deformation having a deep layer of compression within the surface. The burnishing apparatus is then passed in a predetermined pattern across the area to be burnished such that the zones of deformation formed by each pass of the burnishing apparatus preferably do hot overlap.

In another preferred embodiment of the present invention, the method further comprises the steps of predetermining and adjusting the application force to be applied against the surface of the workpiece; predetermining the amount of lubrication and cooling required for the burnishing operation; automatically supplying the required lubrication fluid; adjusting the fluid pressure to provide the proper amount of lubrication fluid to the surface of the workpiece; and programming a control unit to direct the burnishing apparatus to make a plurality of passes over the workpiece to provide the maximum compressive residual stress with the minimum of cold working and surface hardening.

In another preferred embodiment of the invention the method is performed by a burnishing apparatus comprising a tip member incorporating a ball seat, a burnishing ball disposed within the ball seat, a rod member integrally formed with the tip member to define a socket, and a socket support for supporting the socket on a conventional tool holder. The socket is provided with means for directing lubrication fluid from a reservoir to the ball seat to permit the burnishing ball to freely rotate and for directing a predetermined amount of lubricating fluid to the surface of the workpiece.

In operation, lubrication fluid is directed into the tip member of the socket to force the burnishing ball outwardly towards the surface of the workpiece to be burnished. Capillary action draws lubrication fluid around the outer surface of the burnishing ball until fluid pressure is equalized to permit the burnishing ball to float continuously upon a thin film of lubrication fluid to allow the burnishing ball to function as a freely rotating fluid bearing and to permit a sufficient amount of lubrication fluid to transfer onto the surface of the workpiece to provide lubrication and cooling.

In another preferred embodiment of the invention, the burnishing apparatus is provided with means for adjusting the compression force being applied to the surface of the workpiece.

In another preferred embodiment of the invention, the burnishing apparatus is connected to a control device for automatically controlling the movement, position and compression force of the burnishing ball.

A primary object of this invention, therefore, is to provide a method of providing a part with an improved finish and with improved physical properties.

Another primary object of this invention is to provide a method of inducing a compressive stress layer on the surface of a part.

Another primary object of this invention is to provide a method of inducing a compressive stress layer on the surface of a part which is relatively inexpensive.

Another primary object of this invention is to provide a method of inducing a compressive stress layer having a relatively well defined localized compressive stress zone.

Another primary object of this invention is to provide a method of inducing a compressive stress layer on the surface of a part and which provides a much longer retention of the compressive stresses than have previously been available using conventional methods of burnishing or shot peening.

Another primary object of this invention is a method of inducing a compressive stress layer on the surface of a part with the minimum of cold working and work hardening of the surface.

The apparatus used for inducing a compressive stress layer on the surface of a part may automatically provide the work surface of a metal part with a fluid for lubricating and cooling the work surface during burnishing operations.

The apparatus used for inducing a compressive stress layer on the surface of a part may be adjusted to provide a predetermined compressive force on the surface of the workpiece.

These and other objects and advantages of the invention will be apparent from the following description, the accompanying drawings and the appended claims.

### Brief Description of the Drawings

The details of the invention will be described in connection with the accompanying drawings, in which:
**FIG. 1** is a longitudinal cross-sectional view of a burnishing apparatus;
**FIG. 2** is a longitudinal cross-sectional view of the socket of **FIG. 1** showing the generally cylindrical tip member integrally formed with a generally cylindrical rod member;
**FIG. 3** is an end view of the ball burnishing head of **FIG. 1** showing the burnishing ball and the retaining edge of the retaining cap having a plurality of channels protruding there through;
**FIG. 4** is a longitudinal cross-sectional view of another preferred embodiment of the burnishing apparatus showing the use of a follower rod for adjusting the compressive force of the burnishing ball against the surface of a workpiece;
**FIG. 5** is a graph illustrating the residual compressive stress layer induced in the surface of a workpiece produced by conventional and the single-point burnishing method of the subject invention;
**FIG. 6** is a graph illustrating the percent of cold working associated with the residual compressive stress layers produced as shown in **FIG. 5**;
**FIG. 7** is a graph illustrating the residual compressive stress layer induced in the surface of a workpiece produced by conventional shot peening and the single-point burnishing method of the subject invention and residual compressive stress retention after one hour at an elevated temperature;
**FIG. 8** is a graph illustrating the percent of cold working associated with the residual compressive stress layers of **FIG. 7**;
**FIG. 9** is a graph illustrating the residual compressive stress layer induced in the surface of a workpiece and residual compressive stress retention after one hour at an elevated temperature produced by conventional gravity peening and the single-point burnishing method of the subject invention;
**FIG. 10** is a graph illustrating the percent of cold working associated with the residual compressive stress layers of **FIG. 9**;
**FIG. 11** is a partial side view of more than one burnishing apparatus of **FIG. 1** showing a method of simultaneously burnishing more than one side of a workpiece;
**FIG. 12** is a partial side view of more than one burnishing apparatus of **FIG. 1** showing a method of burnishing the interior surface of a workpiece; and
**FIG. 13** is a partial side view of another embodiment of the burnishing apparatus of **FIG. 1** showing a method of burnishing the surface of a workpiece having a acute surface angle such as a dovetail slot of a turbine or compressor disk.

### Best Mode for Carrying Out the Invention

The burnishing method of the present invention utilizes the process of single-point burnishing to provide deep compression with a minimal amount of cold working and surface hardening. In particular, the area to be burnished along the surface of the workpiece is defined and a burnishing apparatus having a single-point of contact burnishing means is forced against the surface of the workpiece to produce a zone of deformation producing a deep layer of compression within the surface. The burnishing means is then passed in a predetermined pattern across the area to be burnished such that the zones of deformation formed by each pass of the burnishing means do not overlap. It has been unexpectedly found that the single-point burnishing method, applied in a single-pass, or multiple passes of reduced compressive force, is effective for producing compressive residual stresses following tensile deformation of the surface to produce deep compression with minimal cold working.

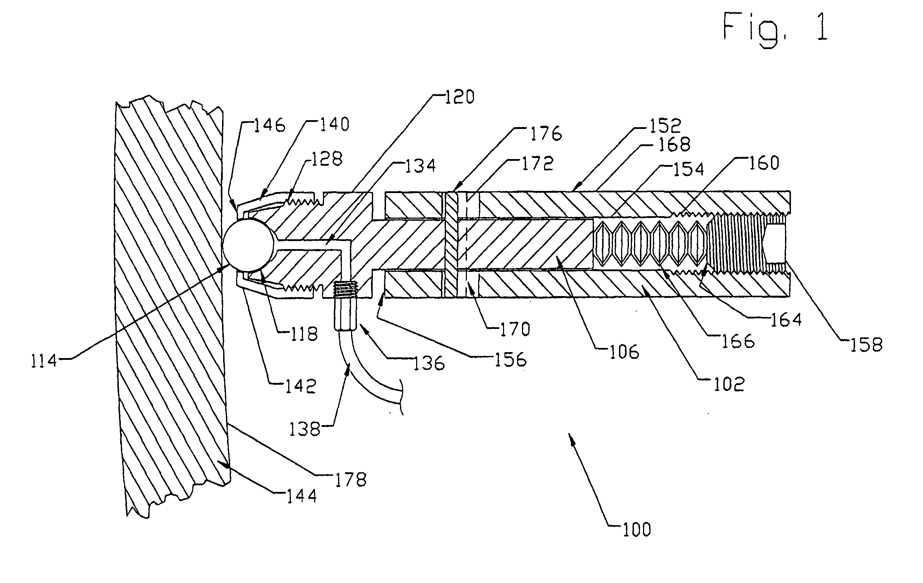

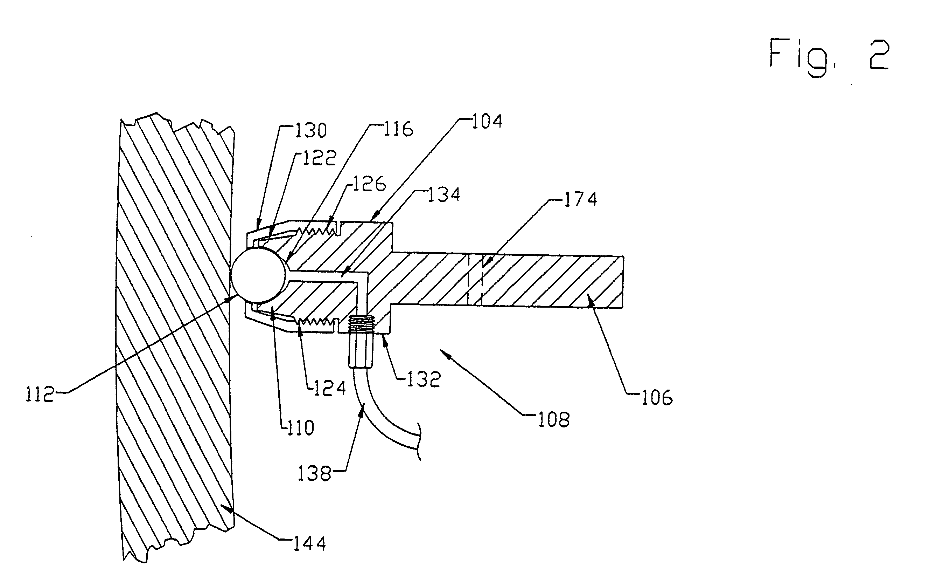

Referring to **FIGS. 1** and **2**, a preferred embodiment of the burnishing apparatus **100** for implementing the burnishing method of the subject invention is shown comprising a generally cylindrical tip member **104** integrally formed with a generally cylindrical rod member **106** to define a socket **108,** and a socket support **102** for supporting the socket on a conventional tool holder ("not shown).

The tip member **104** includes a ball seat **110** having an essentially spherical shape adapted to the surface **112** of a burnishing ball **114** which is disposed within the ball seat **110**. The size of the ball seat **110** is determined by the diameter of the burnishing ball **114** and is selected to provide a small clearance **116** between the support surface **118** of the ball seat **110** and the burnishing ball **114**. The burnishing ball **114** may be selected from various materials having a higher yield strength than the workpiece and having a relatively high elastic modules to allow maximal deformation of the workpiece. Typical materials include, but are not limited to, hardened steel, tungsten carbide and other similar materials. The outer peripheral surface **120** of the tip member **104** includes a tapered outer portion **122** and a cylindrical intermediate portion **124** having a threaded outer surface **126** for mating with the inner threaded surface **128** of a retaining cap **130**, and an inner portion **132** of somewhat greater diameter than the intermediate portion **124**. The tip member **104** of the socket **108** is further provided with a fluid passage **134** in flow communication with the ball seat **110** and extending from the ball seat **110** through the tip member **104** to a fitting **136** for connecting to an external fluid supply **138**.

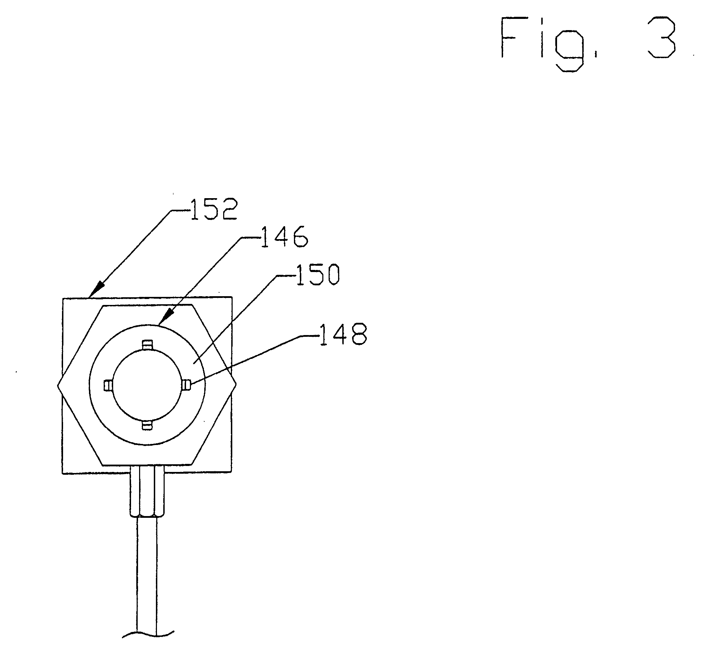

The retaining cap **130** is adapted to the size and configuration of the tip member **104** to be positioned longitudinally along and encircling the outer peripheral surface **120** of the tip member **104**. The forward portion **140** of the outer peripheral surface **142** of the retainer cap **130** is tapered to provide minimum interference with the arbitrary geometry of a workpiece **144**, and includes a radially inwardly extending retaining edge **146** for loosely retaining the burnishing ball **114** in the ball seat **110**. Referring to **FIG. 3**, several channels **148** are spaced along the surface **150** of the retaining edge **146** and penetrate axially there through, the purpose of which will be presently described.

The socket support **102** of the burnishing apparatus **100** includes a slide **152** comprising a longitudinally extending bore **154** having a first end **156** for receiving the rod member **106** of the burnishing socket **108** and a second end **158** having a threaded inner surface **160**. Received on the threads is a pressure adjustment screw **162** having an inner end **164** which is coupled to the rod member **106** of the burnishing socket **108** through a mechanical spring means **166** such as a Belvil or compression spring or other like means. In order to lock the rod member **106** within the first end **156** of the slide **152**, the outer peripheral surface **168** of the socket support **102 i**s provided with first and second recesses **170** each having a radially extending aperture **172** which cooperate with a radially extending aperture **174 (FIG. 2)** in the rod member **106** for receiving a lock pin **176**. The recesses and lock pin **176** configuration allows the socket **108** to expand or contract axially towards or away from the workpiece **144** while permitting the socket **108** to be easily attached or detached from the socket support **102.** However, other locking means such as detents, locking screws, and the like may also be utilized for retaining the rod member 106 within the bore **154** of the slide **152.**

Referring to **FIG. 3,** the slide **152** has a generally rectangular cross-section to permit it to be easily mounted to a fixture of any particular description for controlling the movement of the burnishing apparatus **100**, for example within the recess of a conventional lathe tool post. However, other cross-sectional configurations, such as a circular cross-section, may also be selected. Further, it will be apparent to one skilled in the art that the socket support may be provided with a flange or other known means for mounting onto a conventional tool support fixture.

To understand how the parts above described are interrelated, the operation of the burnishing apparatus **100** will now be described. During operation, lubricating fluid is fed under pressure from the external lubricating fluid supply **138** by use of a conventional fluid pumping system (not shown), through the fitting **136** and fluid passage **134,** and into the clearance **116** to force the burnishing ball **114** outwardly such that the forward most tip of the burnishing ball **114** extends slightly beyond the retaining edge **146** of the retaining cap **130**. Capillary action then draws the lubricating fluid around the outer surface **112** of the burnishing ball **114** until fluid pressure is equalized to permit the burnishing ball **114** to float continuously upon a thin film of lubricating fluid thereby providing a freely rotating fluid bearing. The socket **108** is then advanced towards the surface **178** of the workpiece **144** until the forward most tip of the burnishing ball **114** makes contact with the workpiece surface **178**. By further adjusting the fluid pressure, a desired amount of lubrication fluid will penetrate around the burnishing ball **114** and flow out through the fluid channels **148** in the retaining edge **146** to be transferred onto the surface **178** of the workpiece **144** to provide the desired lubrication and cooling for the burnishing operation.

The proper pressure or compressive force to be applied to the surface **178** of the workpiece **144** during the burnishing operation is provided by carefully tightening or loosening the adjustment screw **162**. Because the burnishing ball **114** is coupled to the adjustment screw **162** through the spring means **166**, tightening or loosening the adjustment screw **162** will cause the spring means **166** to compress or expand axially and will correspond to a given force exerted on the surface **178** of the workpiece **144** by the burnishing ball **114.** Further, because the burnishing ball **114** is coupled through a spring means **166** having known spring characteristic, slight variations in the workpiece surface **178** will be absorbed by the spring means **166** without affecting the burnishing operation. Accordingly, the pressure or the compressive force exerted on the surface **178** of the workpiece **144** by the burnishing ball **114** can be precisely regulated. The burnishing operation is then controlled by a conventional electronic control unit, not shown, which controls the movement of the workpiece or the movement of the burnishing head.

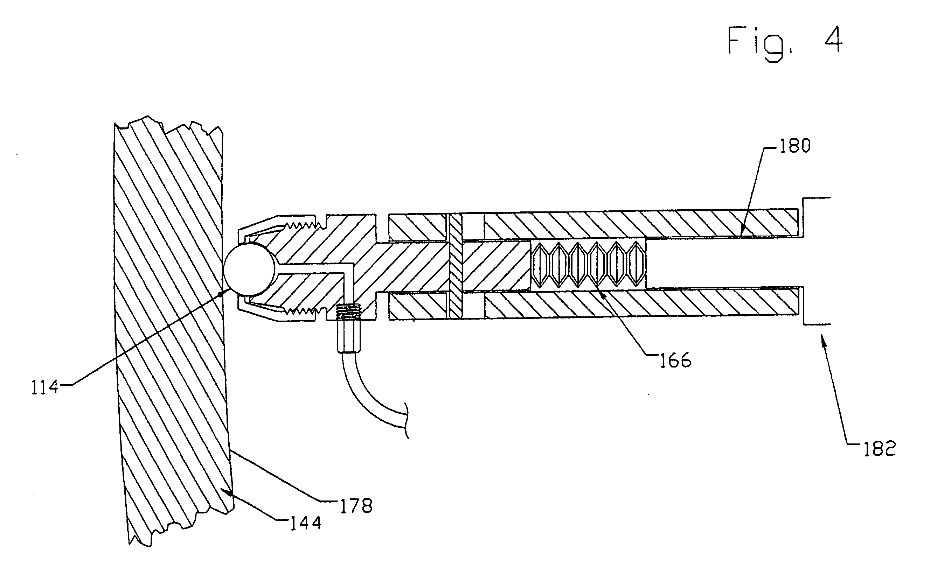

In another preferred embodiment of the invention as shown in **FIG. 4**, the adjustment screw is replaced by a follower rod **180** of a cylinder piston assembly **182**. By moving the follower rod **180** inwardly or outwardly, the spring tension is correspondingly increased or decreased and the pressure or compressive force applied by the burnishing ball **114** to the surface **178** of the workpiece **144** is correspondingly adjusted.

The apparatus for implementing the method of the present invention utilizes the process of single-point burnishing, whereby the forward most tip of the burnishing ball is caused to pass over the surface of the workpiece in a rolling motion to provide deep compression with a minimal amount of cold working and surface hardening. It has been unexpectedly found that the single-point burnishing method applied in a single-pass or multiple passes of reduced compressive force is effective for producing compressive residual stresses following tensile deformation of the surface and to a certain depth to produce deep compression with minimal cold working. Further, allowing the burnishing ball to function as a freely rotating fluid bearing, complex curved surfaces can be easily burnished.

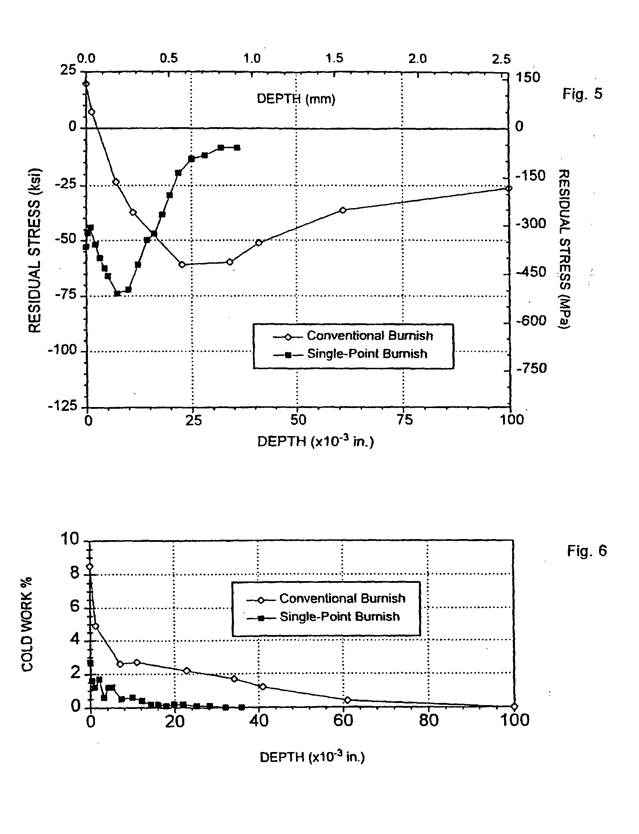

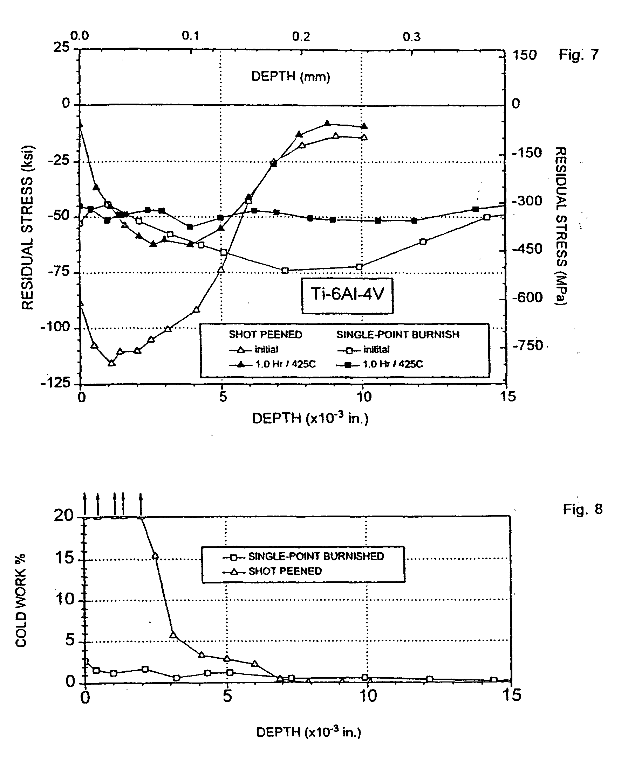

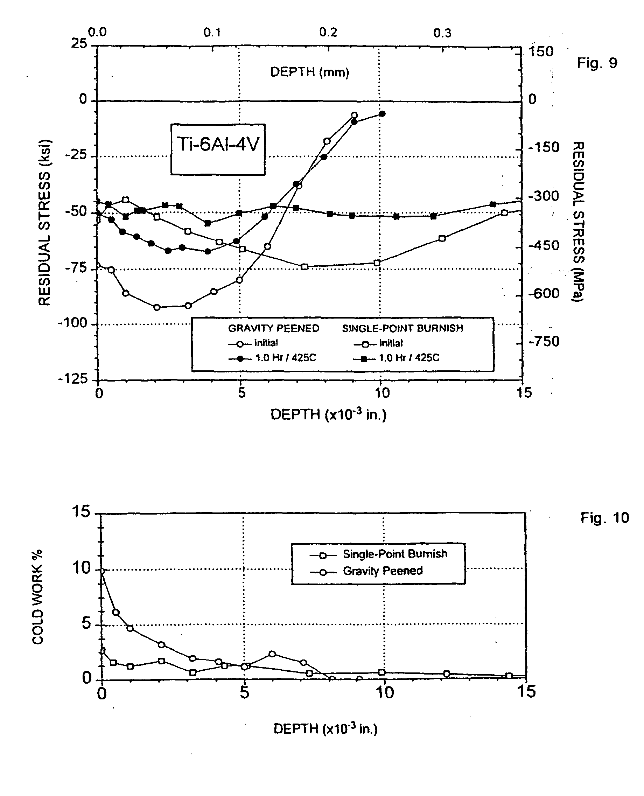

Referring to **FIGS. 5**, through **10**, the residual stress distribution (**FIG. 5**) and the associated percent of cold working (**FIG. 6**) is shown comparing conventional burnishing and the single point burnishing method of the present invention. **FIGS. 7** and **9** show the amount of relaxation of compressive residual stress (after 1 hour at 425C) for the surface layer of a specimen and the percent of cold working associated therewith (**FIGS. 8** and **10**)for the single-point burnishing method of the subject invention and for conventional shot peening and gravity shot peening methods, respectively. The method for measuring subsurface residual stress and the percentage of cold working is known in the art and is described in Paul S. Prevey, "The Measurement of Subsurface Residual Stress and Cold Work Distributions in Nickel Base Alloys," Residual Stress in Design, Process and Materials Selection, ed. W.B. Young, Metals Park, Ohio: American Society for Metals, 1987, pp. 11 - 19. The single-point burnishing method of the subject invention produces cold work and surface work hardening far less than either conventional shot peening or gravity peening. Unexpectedly, it has been found that the increase in residual compressive stress with minimal cold work developed by the subject invention penetrates to a greater depth than most conventional methods, such as shot peening. Further, it has been unexpectedly found that by cold working the surface less than about 3.5%, and preferably less than about 2.0%, results in longer retention of compressive residual stress at elevated temperature, less rapid relaxation under cyclic loading, and minimizes the alteration of the residual stress field during tensile or compressive overload than conventional cold working and surface hardening processes. In addition, the burnishing method of the present invention may automatically provide lubrication and cooling at the point of contact of the workpiece and the contact portion of the burnishing head thereby minimizing the deformation of the surface of the workpiece and without preventing or hindering the burnishing operation.

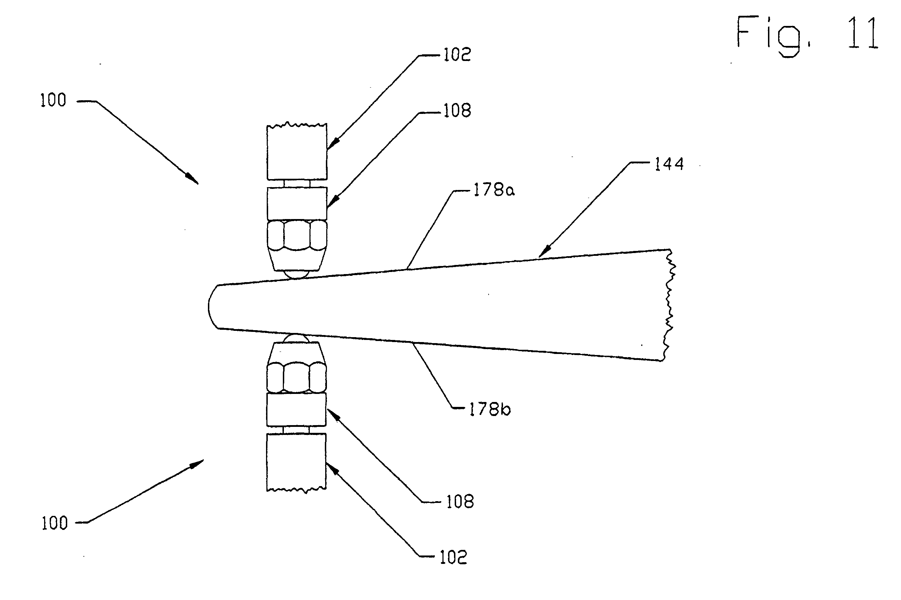

It will be apparent to one skilled in the art that the burnishing process and the apparatus for implementing the burnishing process of the subject invention can be utilized for a variety of workpiece configurations. For example, referring to **FIG. 11**, a workpiece **144** having more than one surface **178a** and **178b** is shown utilizing more than one burnishing apparatus **100** each having a socket **108** attached to a respective socket support **102**. As shown, the socket supports **102** may be positioned to permit both surfaces **178a** and **178b** of the workpiece **144** to be burnished simultaneously and to permit the burnishing forces to be directly opposing and balanced to allow the workpiece **144** to be supported between the sockets **108**.

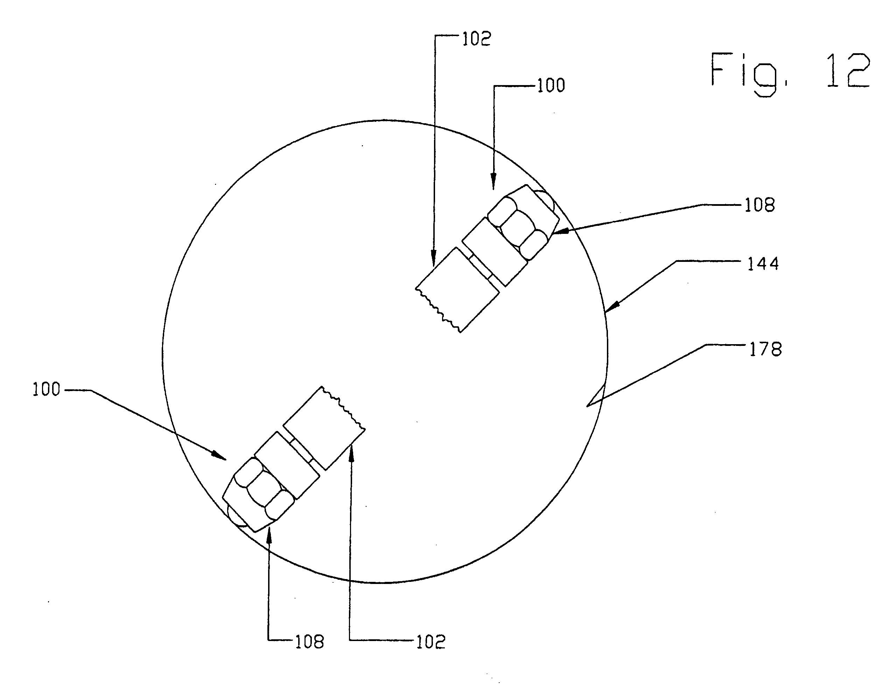

In another example of an apparatus for implementing the burnishing process of the subject invention, as illustrated in **FIG. 12**, a workpiece **144** having a generally cylindrical inner surface **178** is burnished utilizing a pair of axially opposed burnishing apparatus **100**, each having a socket **108** attached to a respective socket support **102**.

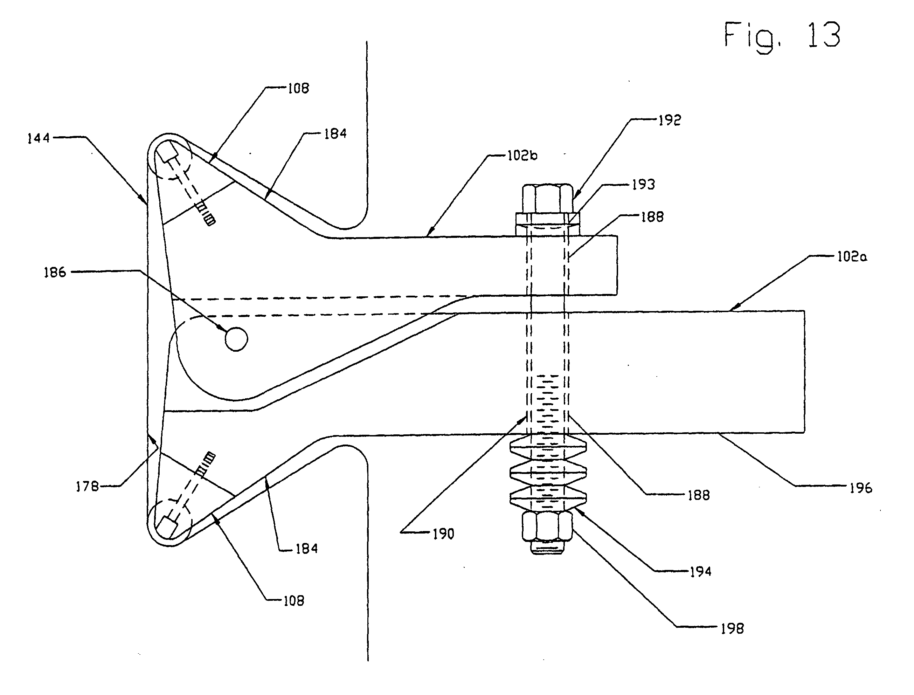

Referring to **FIG. 13**, another embodiment of the apparatus for implementing the burnishing process of the subject invention is shown, whereby complex work surfaces such as found in dovetail slots for turbine or compressor disks used in turbo machinery may be easily burnished. A pair of sockets **108**, which have been previously described and the detail of which has not been shown for clarity, are shown each mounted onto a lobe **184** of respective socket supports **102a** and **102b** in such a manner that the sockets **108** are directed outwardly at preselected angles. The socket supports **102a** and **102b** are rotatably pinned by a conventional pin **186** or other similar means to permit the socket **108** to be easily pivoted into position for engaging with the surface **178** of the workpiece **144**. The socket supports **102a** and **102b** each include a bore **188** for receiving a threaded shank **190** of a bolt **192** secured in place by a conventional threaded washer **193**. A spring means **194** is positioned about the shank **190** of the bolt **192** and is captured between the outer surface **196** of one socket support **102a** and a nut **198** threaded on the shank **190** and is of sufficient force to prevent the nut **198** from rotating while permitting slight pivoting of the socket supports **102a** and **102b** to respond and absorb slight variations in the workpiece surface.

Accordingly, the method of the subject invention provides a relatively inexpensive and effective means of providing a compression force on a workpiece to induce compressive stress in a well defined localized area of a simple or complex workpiece surface configuration with a minimum of cold working and surface hardening. By minimizing the amount of cold working and surface hardening, it has been unexpectedly found that the method of the subject invention produces longer retention of compressive residual stress at elevated temperature, less relaxation under cyclic loading, and minimizes the alteration of the residual stress field during tensile or compressive overload. Accordingly, contrary to the practice and teaching of the burnishing industry, the method of the subject invention induces a compressive stress layer in the surface of a workpiece while deliberately minimizing the amount of cold working and surface hardening.

Although this invention has been shown and described with respect to detailed embodiments thereof, it will be understood by those skilled in the art that various changes may be made without departing from the scope of the invention as defined in the accompanying claims.

## Claims

1. A method of inducing a compressive stress layer on the surface of a workpiece, the method comprising the steps of: defining a surface area for receiving compressive stress; and performing a burnishing operation to produce a zone of deformation for inducing a deep layer of compression within the surface of the workpiece, wherein said burnishing operation is performed by a burnishing apparatus (100) having a single-point burnishing means, **characterised in that** the layer of compression has an associated cold working of less than 3.5 percent.

2. The method of claim 1 wherein the associated cold working is less than 2.0 percent.

3. The method of claim 1 further comprising the step of passing said single-point burnishing means in a predetermined pattern across said defined surface area such that the zones of deformation formed by each pass of said single-point burnishing means do not substantially overlap.

4. The method of claim 1 further comprising the steps of: predetermining the amount of lubrication and cooling required for performing the burnishing operation; and automatically supplying the predetermined amount of lubrication fluid required for performing the burnishing operation to the surface of the workpiece.

5. The method of claim 1, wherein said burnishing apparatus (100) is provided with control means for controlling the passing of said single-point burnishing means in a predetermined pattern across the surface of the workpiece.

6. The method of claim 1, wherein said burnishing apparatus (100) comprises means for adjusting the force being applied by said single-point burnishing means against the surface of the workpiece.

7. The method of claim 1, wherein said single-point burnishing means comprises:
a socket (108) having a tip member (104) incorporating a ball seat (110); and a burnishing ball (114) disposed within the ball seat (110).

8. The method of claim 7, wherein said burnishing apparatus (100) further comprises:
a rod member (106) integrally formed with said tip member (104); a socket support (102) for supporting the socket (108) on a conventional tool holder; means for directing lubrication fluid from a reservoir to said ball seat (110) to permit said burnishing ball (114) to freely rotate; and means for automatically supplying said predetermined amount of lubrication fluid to the surface of the workpiece.

9. The method of claim 8, wherein said lubrication fluid is directed into said tip member (104) of said socket (108) to force the burnishing ball (114) outwardly towards the surface of the workpiece.

10. The method of claim 9, wherein capillary action draws said lubrication fluid around the outer surface of said burnishing ball (114) until fluid pressure is equalized to permit said burnishing ball (114) to float continuously upon a thin film of said lubrication fluid thereby allowing said burnishing ball (114) to function as a freely rotating fluid bearing.

11. The method of claim 8 wherein said socket support (102) comprises:
a slide (152) comprising a longitudinally extending bore (154) having a first end (156) for receiving said rod member (106) of said socket, and a second end (158) having a threaded inner surface (160);
an adjustment screw (162) received in said threaded inner surface (160) of said bore (154), said adjustment screw (162) having an inner end (164) which is coupled to said rod member (106) of said socket through a spring (166).

12. The method of claim 8 wherein said socket support (102) comprises:
a slide comprising a longitudinally extending bore having a first end for receiving said rod member of said socket, and a second end for receiving a follower rod (180) of a cylinder piston assembly (182).

13. The method of claim 7, wherein said burnishing ball is freely rotating and said method comprises the steps of:
forcing the forward most tip of said burnishing ball (114) against the surface of the workpiece; and
rolling said burnishing ball (114) over said defined surface area to induce a deep layer of compression within the surface with cold working of less than 3.0 percent.

14. The method of claim 13 wherein said cold working is less than 2.0 percent.

15. The method of claim 13, wherein said burnishing apparatus is provided with a control means for controlling the passing of said burnishing ball (114) in a predetermined pattern across the surface of the workpiece.

16. The method of claim 13, wherein said burnishing apparatus (100) further comprises:
a rod member (106) integrally formed with said tip member;
a socket support (102) for supporting said socket on a conventional tool holder;
means for directing lubrication fluid from a reservoir to said ball seat (110) to force said burnishing ball (114) outwardly towards the surface of the workpiece and to permit said burnishing ball (114) to freely rotate; and
means for automatically supplying said lubrication fluid to the surface of the workpiece.

17. The method of claim 16 wherein said socket support (102) comprises:
a slide (152) comprising a longitudinally extending bore (154) having a first end (156) for receiving said rod member (106) of said socket, and a second end (158) having a threaded inner surface (160);and
an adjustment screw (162) received in said threaded inner surface (160) of said bore (154), said adjustment screw (162) having an inner end (106) which is coupled to said rod member (106) of said socket through a spring (166).

18. The method of claim 16 wherein said socket support comprises:
a slide comprising a longitudinally extending bore having a first end for receiving said rod member of said socket, and a second end for receiving a follower rod (108) of a cylinder piston assembly (182).

## Patentansprüche

1. Verfahren zum Einbringen einer Druckspannungsschicht auf die Oberfläche eines Werkstücks, wobei das Verfahren die folgenden Stufen umfasst: Festlegen eines Oberflächenbereichs, der die Druckspannung aufnehmen soll; und Durchführen eines Brünier-, Glättwalz- oder Feinwalzvorgangs zur Erzeugung einer Formungszone zum Einbringen einer tiefen Kompressionsschicht innerhalb der Oberfläche des Werkstücks, wobei dieser Brüniervorgang durch eine Brüniervorrichtung (100) durchgeführt wird, die über ein Einzelpunkt-Brüniermittel verfügt, **dadurch gekennzeichnet**, die Kompressionsschicht eine zugeordnete Kaltbearbeitung von weniger als 3,5 Prozent hat.

2. Verfahren nach Anspruch 1, wobei die zugeordnete Kaltbearbeitung weniger als 2,0 Prozent beträgt.

3. Verfahren nach Anspruch 1, weiterhin umfassend die Stufe des Führens dieses Einzelpunktbrüniermittels in einem vorbestimmten Muster quer über den definierten Oberflächenbereich, derart, dass die durch jeden Durchgang dieses Einzelpunktbrüniermittels geformten Verformungszonen sich im Wesentlichen nicht überlappen.

4. Verfahren nach Anspruch 1, weiterhin umfassend die Stufen des: Bestimmens der Menge an Schmiermittel und Kühlung, die für die Durchführung des Brüniervorgangs erforderlich sind; und automatische Zulieferung der vorbestimmten Menge an Schmiermittelfluid, das für die Durchführung des Brüniervorgangs auf die Oberfläche des Werkstücks notwendig ist.

5. Verfahren nach Anspruch 1, wobei diese Brüniervorrichtung (100) mit Regelmitteln zum Regeln des Führens des Einzelpunkibrüniermittels in einem vorbestimmten Muster quer über die Oberfäche des Werkstücks versehen ist.

6. Verfahren nach Anspruch 1, wobei diese Brüniervorrichtung (100) Mittel umfasst, um die Kraft einzustellen, die durch dieses Einzelpunktbrüniermittel gegen die Oberfläche des Werkstücks aufgebracht wird.

7. Verfahren nach Anspruch 1, wobei dieses Einzelpunktbrüniermittel umfasst: eine Büchse (108) mit einem Spitzenelement (104), in dem ein Kugelsitz (110) eingebaut ist und eine Brünierkugel (114), die innerhalb des Kugelsitzes (110) angeordnet ist.

8. Verfahren nach Anspruch 7, wobei diese Brüniervorrichtung (100) weiterhin umfasst: ein Stangenelement (106), das integral mit dem Spitzenelement (104) ausgebildet ist; einen Büchsen- bzw. Hülsenträger (102) zum Lagern der Büchse (108) auf einem konventionellen Werkstückhalter; Mittel, um das Schmierfluid aus einem Speicher gegen den Kugelsitz (110) zu richten, um es der Brünierkugel (114) zu ermöglichen, sich frei zu drehen; und Mittel, um automatisch diese vorbestimmte Menge an Schmierfluid an die Oberfläche des Werkstücks zu liefern.

9. Verfahren nach Anspruch 8, wobei dieses Schmierfluid in dieses Spitzenelement (104) dieser Büchse (108) gerichtet ist, um die Brünierkugel (114) nach außen gegen die Oberfläche des Werkstücks zu drängen bzw. zu drücken.

10. Verfahren nach Anspruch 9, wobei Kapillarwirkung dieses Schmierfluid um die Außenfläche dieser Brünierkugel (114) zieht, bis der Fluiddruck ausgeglichen wird, um es dieser Brünierkugel (114) zu ermöglichen, kontinuierlich auf einem dünnen Film dieses Schmierfluids zu schwimmen und es hierdurch der Brünierkugel (114) zu ermöglichen, als ein frei rotierendes Fluidlager zu wirken.

11. Verfahren nach Anspruch 8, wobei dieser Hülsenträger (102) umfasst:
einen Schlitten (152), der eine in Längsrichtung verlaufende Bohrung (154) mit einem ersten Ende (156) zur Aufnahme dieses Stangenelements (106) dieser Büchse und ein zweites Ende (158) mit einer mit Gewinde versehenen Innenfläche (160) umfasst;
eine Einstellschraube (162), die in dieser mit Gewinde versehenen Innenfläche (160) dieser Bohrung (154) aufgenommen ist, wobei diese Einstellschraube (162) über ein inneres Ende (164) verfügt, das mit dem Stangenelement (106) dieser Büchse über eine Feder (166) gekuppelt bzw. gekoppelt ist.

12. Verfahren nach Anspruch 8, wobei der Büchsenträger (102) umfasst:
einen Schlitten, der über eine in Längsrichtung sich erstreckende Bohrung mit einem ersten Ende, das dieses Stangenelement dieser Büchse aufnimmt und über ein zweites Ende zur Aufnahme einer Stößelstange (180) einer Zylinder-Kolbenanordnung (182) verfügt.

13. Verfahren nach Anspruch 7, wobei die Brünierkugel sich frei dreht und dieses Verfahren die folgenden Stufen umfasst:
Beaufschlagen der vordersten Spitze dieser Brünierkugel (114) gegen die Oberfläche des Werkstücks; und
Walzen oder Rollen dieser Brünierkugel (114) über diesen definierten Oberflächenbereich zur Induzierung einer tiefen Kompressionsschicht in der Fläche mit Kaltwalzen von weniger als 3 Prozent.

14. Verfahren nach Anspruch 13, wobei dieses Kaltwalzen weniger als 2,0 Prozent beträgt.

15. Verfahren nach Anspruch 13, wobei diese Brüniervorrichtung mit einem Regelmittel versehen ist, um den Durchgang bzw. Weg der Brünierkugel (114) in einem vorbestimmten Muster quer über die Oberfläche des Werkstücks zu regeln.

16. Verfahren nach Anspruch 13, wobei die Brüniervorrichtung (100) weiterhin umfasst:
ein Stangenelement (106), das integral mit diesem Spitzenelement ausgebildet ist;
einen Büchsenträger (102) zum Lagern der Büchse auf einem konventionellen Werkzeughalter;
Mittel zum Richten des Schmierfluids aus einem Speicher auf diesen Kugelsitz (110), um diese Brünierkugel (114) nach außen gegen die Oberfläche des Werkstücks zu beaufschlagen und es der Brünierkugel (114) zu ermöglichen, sich frei zu drehen; und
Mittel zum automatischen Liefern dieses Schmierfluids an die Oberfläche des Werkstücks.

17. Verfahren nach Anspruch 16, wobei der Büchsenträger (102) umfasst:
einen Schlitten (152), der eine in Längsrichtung sich erstreckende Bohrung (154) mit einem ersten Ende (156) zur Aufnahme dieses Stangenelements (106) dieser Büchse und mit einem zweiten Ende aufweist, das über eine mit Gewinde versehene Innenfläche (160) verfügt; und
eine Einstellschraube (162), die in dieser mit Gewinde versehenen Innenfläche (160) dieser Bohrung (154) aufgenommen ist, wobei diese Einstellschraube (162) über ein inneres Ende (106) verfügt, das gegen das Stangenelement (106) dieser Büchse durch eine Feder (166) gekuppelt ist.

18. Verfahren nach Anspruch 16, wobei dieser Büchsenträger umfasst:
einen Schlitten, der eine in Längsrichtung sich erstreckende Bohrung mit einem ersten Ende zur Aufnahme des Stangenelements dieser Büchse und einem zweiten Ende zur Aufnahme einer Stößelstange (108) einer Zylinderkolbenanordnung (182) umfasst.

## Revendications

1. Procédé de production d'une couche de tension de compression à la surface d'une pièce, le procédé comprenant les étapes consistant à : définir une région de surface pour recevoir une tension de compression et réaliser une opération de brunissage pour obtenir une zone de déformation afin de produire une couche profonde de compression à la surface de la pièce, dans lequel ladite opération de brunissage est effectuée par un appareil de brunissage (100) ayant un dispositif de brunissage en un seul point, **caractérisé en ce que** la couche de compression a une déformation à froid associée de moins de 3,5 pour cent.

2. Procédé selon la revendication 1 dans lequel la déformation à froid associée est inférieure à 2,0 pour cent.

3. Procédé selon la revendication 1 comprenant en outre l'étape consistant à faire passer ledit dispositif de brunissage en un seul point dans un gabarit prédéterminé à travers ladite région de surface définie de telle manière que les zones de déformation formées par chaque passage dudit dispositif de brunissage en un seul point ne se chevauchent sensiblement pas.

4. Procédé selon la revendication 1 comprenant en outre les étapes consistant à prédéterminer la quantité de graissage et de refroidissement nécessaire à la réalisation de l'opération de brunissage ; et à fournir automatiquement la quantité prédéterminée de fluide de graissage nécessaire à la réalisation de l'opération de brunissage à la surface de la pièce.

5. Procédé selon la revendication 1, dans lequel ledit appareil de brunissage (100) est muni d'un moyen de contrôle permettant de contrôler le passage dudit dispositif de brunissage en un seul point dans un gabarit prédéterminé à travers la surface de la pièce.

6. Procédé selon la revendication 1, dans lequel ledit appareil de brunissage (100) comprend un moyen de régler la force appliquée par ledit dispositif de brunissage en un seul point contre la surface de la pièce.

7. Procédé selon la revendication 1, dans lequel ledit dispositif de brunissage en un seul point comprend :
■ une douille (108) ayant un embout (104) incorporant_une butée sphérique (110) ; et une bille de brunissage (114) disposée à l'intérieur de la butée sphérique (110).

8. Procédé selon la revendication 7, dans lequel ledit appareil de brunissage (100) comprend en outre :
■ une tige (106) formée en une pièce avec ledit embout (104) ; un support de douille (102) pour supporter la douille (108) sur un porte-outil traditionnel ; un dispositif pour diriger le fluide de graissage d'un réservoir à ladite butée sphérique (110) afin de permettre à ladite bille de brunissage (114) de tourner librement ; et un dispositif pour fournir automatiquement ladite quantité prédéterminée de fluide de graissage à la surface de la pièce.

9. Procédé selon la revendication 8, dans lequel ledit liquide de graissage est dirigé dans ledit embout (104) de ladite douille (108) pour forcer la bille de brunissage (114) extérieurement vers la surface de la pièce.

10. Procédé selon la revendication 9, dans lequel une action capillaire tire ledit liquide de graissage autour de la surface extérieure de ladite bille de brunissage (114) jusqu'à ce que la pression du fluide soit égalisée pour permettre à ladite bille de brunissage (114) de flotter en permanence sur une mince pellicule dudit liquide de graissage permettant ainsi à ladite bille de brunissage (114) de fonctionner comme un palier fluide tournant librement.

11. Procédé selon la revendication 8, dans lequel ledit support de douille (102) comprend :
■ une glissière (152) comprenant un alésage s'étendant longitudinalement (154) ayant une première extrémité (156) pour recevoir ladite tige (106) de ladite douille et une seconde extrémité (158) ayant une surface intérieure filetée (160) ;
■ une vis de réglage (162) reçue dans ladite surface intérieure filetée (160) dudit alésage (154), ladite vis de réglage (162) ayant une extrémité intérieure (164) qui est couplée à ladite tige (106) de ladite douille par un ressort (166).

12. Procédé selon la revendication 8 dans lequel ledit support de douille (102) comprend : une glissière comprenant un alésage s'étendant longitudinalement ayant une première extrémité pour recevoir ladite tige de ladite douille et une seconde extrémité pour recevoir un prolongateur (180) d'un assemblage piston-cylindre (182).

13. Procédé selon la revendication 7, dans lequel ladite bille de brunissage tourne librement et ledit procédé comprend les étapes consistant à : forcer l'embout le plus en avant de ladite bille de brunissage (114) contre la surface de la pièce ; et faire rouler ladite bille de brunissage (114) sur ladite région de surface définie pour produire une couche profonde de compression à l'intérieur de la surface avec déformation à froid de moins de 3,0 pour cent.

14. Procédé selon la revendication 13 dans lequel la déformation à froid est inférieure à 2,0 pour cent.

15. Procédé selon la revendication 13, dans lequel ledit appareil de brunissage est muni d'un moyen de commande permettant de commander le passage de ladite bille de brunissage (114) dans un gabarit prédéterminé à travers la surface de la pièce.

16. Procédé selon la revendication 13, dans lequel ledit appareil de brunissage (100) comprend en outre :
■ une tige (106) formée en une pièce avec ledit embout ;
■ un support de douille (102) pour supporter ladite douille sur un porte-outil traditionnel ;
■ un dispositif pour diriger le liquide de graissage d'un réservoir à ladite butée sphérique (110) pour forcer ladite bille de brunissage (114) extérieurement vers la surface de la pièce et permettre à ladite bille de brunissage (114) de tourner librement ; et
■ un dispositif pour fournir automatiquement ledit liquide de graissage à la surface de la pièce.

17. Procédé selon la revendication 16 dans lequel ledit support de douille (102) comprend :
■ une glissière (152) comprenant un alésage s'étendant longitudinalement (154) ayant une première extrémité (156) pour recevoir ladite tige (106) de ladite douille et une seconde extrémité (158) ayant une surface intérieure filetée (160) ; et
■ une vis de réglage (162) reçue dans ladite surface intérieure filetée (160) dudit alésage (154), ladite vis de réglage (162) ayant une extrémité intérieure (106) qui est couplée à ladite tige (106) de ladite douille par un ressort (166).

18. Procédé selon la revendication 16 dans lequel ledit support de douille comprend :
■ une glissière comprenant un alésage s'étendant longitudinalement ayant une première extrémité pour recevoir ladite tige de ladite douille et une seconde extrémité pour recevoir un prolongateur (180) d'un assemblage piston-cylindre (182).
